Europäisches Patentamt

European Patent Office

Office européen des brevets

(11) Veröffentlichungsnummer: **0 505 960 A1**

## (12) EUROPÄISCHE PATENTANMELDUNG

(21) Anmeldenummer: **92104988.8**

(22) Anmeldetag: **23.03.92**

(51) Int. Cl.⁵: **B29C 47/92**, B29C 47/16

(30) Priorität: **27.03.91 DE 4110060**

(43) Veröffentlichungstag der Anmeldung:
**30.09.92 Patentblatt 92/40**

(84) Benannte Vertragsstaaten:
**BE DE FR GB IT LU NL**

(71) Anmelder: **HOECHST AKTIENGESELLSCHAFT**
**Postfach 80 03 20**
**W-6230 Frankfurt am Main 80(DE)**

(72) Erfinder: **Crass, Günther, Dr. Dipl.-Ing.**
**Bachstrasse 7**
**W-6204 Taunusstein(DE)**
Erfinder: **Müller, Harald, Dr. Dipl.-Ing.**
**Hofheimer Strasse 7**
**W-6238 Hofheim(DE)**
Erfinder: **Janocha, Siegfried, Dr. Dipl.-Chem.**
**Weinfeldstrasse 28**
**W-6200 Wiesbaden(DE)**

(54) **Verfahren und Vorrichtung zum Vergleichmässigen der Dicke einer Folie.**

(57) Die Vorrichtung zum Vergleichmäßigen der Dicke einer Folie aus thermoplastischem Kunststoff umfaßt eine Breitschlitzdüse 4 und eine Heizvorrichtung 7, die mit der oberen Düsenlippe 6 der Breitschlitzdüse integriert ist. Die Heizvorrichtung 7 besteht aus einem mit einer Flüssigkeit 13 gefüllten Hohlkasten und einem Stab 9, der über die Stirnflächen 15 und 16 des Hohlkastens seitlich übersteht. Die Eintritts- und Austrittsöffnung des Stabes in den Hohlkasten sind abgedichtet. Auf der Unterseite des Stabes 9 sind Heizplättchen 10 angeordnet, die elektrisch beheizt werden. Die Flüssigkeit im Hohlkasten dient als Wärmeüberträger und ist ein Öl mit einem Siedepunkt höher als 280 °C. Die Regelung des Dickenprofils der extrudierten Folie 11 erfolgt einerseits über Stellglieder 3 und andererseits werden verbleibende Dick- und/oder Dünnstellen des Folienprofils durch den Stab 9 der Heizvorrichtung 7 geglättet, wobei der Stab quer zur Laufrichtung der Folie über die Folienbreite stufenlos mit Hilfe eines Motors 17 in eine Position verfahren wird, in der die Heizplättchen mit den zu glättenden Dick-/Dünnstellen in Deckung sind. Durch Beaufschlagen der Heizplättchen mit unterschiedlichen Temperaturen bzw. Heizleistungen werden die entsprechenden Dick-/Dünnstellen der Folie 11 geglättet.

Die Erfindung betrifft ein Verfahren zum Vergleichmäßigen der Dicke einer Folie aus thermoplastischem Kunststoff, die durch eine Breitschlitzdüse extrudiert wird, bei dem die jeweilige Dicke der Folie über die Folienbreite gemessen und die Dickenmeßwerte innerhalb von gleichbreiten Folienabschnitten gemittelt werden, sowie eine Vorrichtung hierfür.

Bei der Herstellung von flächigen Gebilden aus Kunststoffen, wie beispielsweise Folien oder Platten, wird im allgemeinen die Kunststoffschmelze von einem kreisförmigen bzw. ovalen Querschnitt durch eine Breitschlitzdüse in einen annähernd rechteckigen Querschnitt umgeformt. Die Breitschlitzdüse liefert dabei ein Vorfolienprofil mit einem nicht exakt rechteckförmigen Querschnitt. Das häufig konvexe Profil dieser Vorfolie wird durch entsprechende Stellglieder an einer der Düsenlippen der Breitschlitzdüse, mit deren Hilfe der Düsenspalt geregelt wird, eingestellt. Die Vorfolie, die von der Breitschlitzdüse geliefert wird, wird anschließend biaxial verstreckt, um eine Endfolie mit einem planen Querdickenprofil zu erhalten. Bei dieser Endfolie handelt es sich somit um eine biaxial orientierte Folie aus Kunststoff, beispielsweise Polypropylen oder Polyester, die durch Längsstreckung über Walzen und Querstreckung in einem Querstreckrahmen geformt ist.

Während des Betriebes einer Folien- bzw. Plattenmaschine unterliegt das Endfolienprofil gewissen Schwankungen, bedingt einerseits durch Rohstoffinhomogenitäten der Kunststoffschmelzen und andererseits durch Abweichungen der Verfahrensparameter von vorgegebenen Sollwerten. Damit dennoch ein planes Querdickenprofil der Endfolie erreicht wird, sind Eingriffe an der Düsenlippe der Breitschlitzdüse erforderlich. Diese im laufenden Betrieb der Maschine vorgenommenen Eingriffe erfolgen im wesentlichen auf zwei Arten, nämlich

(1) Beeinflussung des Dickenprofils durch unterschiedliche Beheizung des Düsenkörpers der Breitschlitzdüse, vornehmlich im Bereich der Düsenlippe, wodurch die Schmelzeviskosität geändert wird, wobei eine örtlich geringere Viskosität zu einem verringerten Reibungswiderstand und damit bei gleichem Druckabfall zu einem höheren Massendurchsatz der Kunststoffschmelze durch den Spalt der Breitschlitzdüse führt und

(2) Beeinflussung des Dickenprofils durch Verstellung von Düsenbolzen, die im allgemeinen mit der Düsenoberlippe im Eingriff stehen, um die Düsenspaltbreite zu verändern. Die Düsenbolzen können beispielsweise manuell verstellt werden, um Druck oder Zug auf vorgegebene Bereiche einer der Düsenlippen auszuüben. Anstelle von mechanisch verstellbaren Bolzen werden sehr häufig sogenannte Thermobolzen eingesetzt, die durch thermische Verstellung vorgegebener Bereiche einer der Düsenlippen den Düsenspalt einstellen. Den Thermobolzen wird elektrische Leistung zugeführt, so daß sie sich stärker oder weniger stark ausdehnen und dadurch Druck oder Zug auf die vorgegebenen Bereiche der Düsenlippe ausüben.

Diese Verstellung erfolgt, wie voranstehend ausgeführt ist, entweder mechanisch manuell über Stellmotoren oder über Thermobolzen. In der Praxis zeigt sich jedoch, daß bei noch so genauer Einstellung des Dickenprofils in der Endfolie Dick- und Dünnstellen zurückbleiben, die nicht mehr beeinflußbar sind. Die Weiterverarbeitung dieser Folien kann dadurch erschwert oder sogar ausgeschlossen werden. Die sich in den Folienrollen ausbildenden ringförmigen Wülste beeinträchtigen die Planlage der abgewickelten Folienbahn, so daß Störungen bei der Weiterverarbeitung der Folienbahn auftreten können.

Aus der DE-PS 30 06 566 ist ein Verfahren zum Vergleichmäßigen der Foliendicke von in Flachfolien-Extrusionsanlagen hergestellten Flachfolien bekannt, bei dem die jeweilige Dicke der Folie in gleichbreiten Folienabschnitten gemessen wird und den Folienabschnitten Korrekturabschnitte der Breitschlitzdüse, aus denen diese extrudiert worden sind, zugeordnet werden. Bei diesem Verfahren werden die Korrekturabschnitte entsprechend den gemessenen Dickenabweichungen der Folienabschnitte von einem Dickenbezugswert mit unterschiedlichen Temperaturen/Heizleistungen beaufschlagt, und zwar jeweils in einem durch die Abweichung vom Dickenbezugswert bestimmten Ausmaß. Als Dickenbezugswert wird entweder die größte Dicke oder die kleinste Dicke eines der Folienabschnitte gewählt. Zeigt der Folienabschnitt eine den Dickenbezugswert übersteigende größere Dicke, so wird abgekühlt, d.h. die Heizleistung verringert, während bei kleinerer Dicke erwärmt, d.h. die Heizleistung erhöht wird.

In der europäischen Patentanmeldung EP-A 0 330 603 ist eine Vorrichtung zum Extrudieren von thermoplastifizierten Kunststoffen durch eine Breitschlitzdüse beschrieben, deren Düsenspalt von zwei Flankenflächen eines Düsenkörpers bestimmt ist, von denen eine als flexible Düsenlippe ausgebildet ist, an der mehrere Hebelarme angeformt sind. Jeder Hebelarm ist zur Veränderung der Spaltweite des Düsenspaltes um eine zum Düsenspalt parallel verlaufende Drehachse durch eine ihn durchsetzende Stellschraube oder dergleichen mechanisch ausgebildete Stelleinrichtung begrenzt führbar.

Bei dem in der DE-PS 37 40 087 beschriebenen Verfahren zur Herstellung einer Folie aus thermoplastischem Kunststoff mit Hilfe einer Breitschlitzdüse sind als Stellglieder sogenannte Piezotranslatoren vorgesehen, die von Regelgrößen einer Regeleinrichtung gesteuert werden. Bei einer Abweichung des Ist-Wertes der Foliendicke in einem Breitenabschnitt der Breitschlitzdüse von einem vorgegebenen Sollwert wird der dem Breitenabschnitt zugeordnete Piezotranslator mit einer entsprechenden Regelgröße beaufschlagt.

Nach der deutschen Offenlegungsschrift DE-A 38 34 719 erfolgt die Verstellung des Düsenspalts einer Breitschlitzdüse mittels luftgekühlter und elektrisch beheizter Thermobolzen, die an einem Ende eine Klaue und am anderen Ende eine Verstellschraube tragen. Die Klauen umfassen einen riegelartigen Düsenvorsprung nahe der oberen Düsenlippe der Breitschlitzdüse und sind mittels lösbarer Kegelstifte mit dem Düsenvorsprung verbunden. Die Verstellschrauben der Thermobolzen sind in einem Gewindeblock eingeschraubt, der seinerseits mit einem Bund des Düsenkörpers verschraubt ist.

Den bekannten Verfahren und Vorrichtungen zum Extrudieren von thermoplastischen Folien ist gemeinsam, daß bei noch so genauer Einstellung des Dickenprofils der Vorfolie Dick- und Dünnstellen zurückbleiben, die sich bis in die biaxial gestreckte Endfolie bemerkbar machen und auch durch die biaxiale Streckung nicht mehr beeinflußbar sind.

Somit ist es Aufgabe der vorliegenden Erfindung, ein Verfahren der eingangs beschriebenen Art so zu verbessern, daß eine Vergleichmäßigung der Foliendicke der Vorfolie unter weitgehendem Ausschluß von Dick- oder Dünnstellen in den einzelnen Folienabschnitten erhalten wird.

Diese Aufgabe wird verfahrensgemäß in der Weise gelöst, daß die Anzahl der gleichbreiten Folienabschnitte gleich der Anzahl der Stellglieder für die verstellbare Oberlippe der Breitschlitzdüse gewählt wird und den Folienabschnitten Verstellabschnitte der Oberlippe, die um die Stellglieder herumliegen, zugeordnet werden, daß in den gleichbreiten Folienabschnitten die Dickenregelung entsprechend den gemessenen Dickenabweichungen der Folienabschnitte von einem vorgegebenen Dickenwert mittels der Stellglieder zur Grobglättung erfolgt und daß die verbleibenden lokalen Dick- und/oder Dünnstellen in den Folienabschnitten zusätzlich mit unterschiedlichen Temperaturen/Heizleistungen quer über die Folienbahn zur Feinglättung der Folie beaufschlagt werden.

In Weiterführung des Verfahrens werden die Dick- und/oder Dünnstellen der Folienbahn mit unterschiedlichen Temperaturen/Heizleistungen mit Hilfe einer stufenlos, quer zur Folienbahn bewegten Heizvorrichtung beaufschlagt und wird die Grobglättung durch die Stellglieder und die Temperaturbeaufschlagung für die Feinglättung durch die Heizvorrichtung von einander gegenüberliegenden Düsenlippen aus vorgenommen.

In einer weiteren Ausgestaltung des Verfahrens werden die lokalen Dick- und/oder Dünnstellen in den Folienabschnitten mit unterschiedlichen Temperaturen/Heizleistungen der quer zur Folienbahn angeordneten Heizvorrichtung, von der gleichen Düsenlippe aus, an der die Grobglättung mittels der Stellglieder geschieht, beaufschlagt.

Die Vorrichtung zum Vergleichmäßigen der Dicke einer Folie aus thermoplastischem Kunststoff, die durch eine Breitschlitzdüse extrudiert wird, mit deren Düsenkörper nahe der oberen Düsenlippe Bolzen als Stellglieder im Eingriff stehen, wobei die oberen Enden der Bolzen über Verstellschrauben mit einem Gewindeblock einer mit der Breitschlitzdüse integrierten Verstelleinrichtung verbunden sind, zeichnet sich dadurch aus, daß eine Heizvorrichtung, die quer zur Folienbahn angeordnet ist, direkten Kontakt mit einer der Düsenlippen hat, einen querverschiebbaren Stab aufweist, an dem Heizplättchen angeordnet sind, die elektrisch beheizt sind.

In Ausgestaltung der Vorrichtung weist die Heizeinrichtung einen prismatischen Hohlkasten auf, der von dem beweglichen Stab durchsetzt ist, dessen Enden an den Stirnflächen des Hohlkasten seitlich überstehen und ist der Hohlkasten mit der oberen oder unteren Düsenlippe integriert.

Die Weiterbildung der erfindungsgemäßen Vorrichtung ergibt sich aus den Merkmalen der Patentansprüche 6 bis 10.

Mit der Erfindung wird der Vorteil erzielt, daß aus einer Messung des Dickenprofils der Vorfolie errechnet werden kann, welches die optimale Quereinstellung der Heizvorrichtung der Breitschlitzdüse ist, um die Dick- oder Dünnstellen zu glätten, die durch die herkömmliche Regelung der Spaltbreite der Breitschlitzdüse nicht geglättet werden können, wobei in einfacher Weise der Stab der Heizvorrichtung anhand des gemessenen Dickenprofils verfahren werden kann und in der vorgegebenen Position in herkömmlicher Weise durch entsprechende Heizleistung die Spaltbreite geregelt wird.

Die Erfindung wird im folgenden anhand der Zeichnungen näher erläutert. Es zeigen:

Fig. 1    ein kontinuierlich über die Breite gemessenes Dickenprofil einer biaxial gestreckten Folie,

Fig. 2    aus dem gemessenen Dickenprofil der Figur 1 ein über eine vorgegebene Anzahl von Werten gemitteltes Dickenprofil der biaxial gestreckten Folie,

Fig. 3    aus dem gemittelten Dickenprofil der Figur 2 ein verdichtetes Regelprofil für die Dicke der biaxial gestreckten Folie in einer vorgegebenen Anzahl von Folienabschnitten,

Fig. 4 ein sogenanntes Restprofil in den Bereichen der Folienabschnitte, die gegenüber den Stellgliedern für die Regelung der Foliendicke quer versetzt sind,

Fig. 5 eine schematische perspektivische Ansicht einer ersten Ausführungsform der Vorrichtung nach der Erfindung und

Fig. 6 eine schematische perspektivische Ansicht einer zweiten Ausführungsform der Vorrichtung nach der Erfindung.

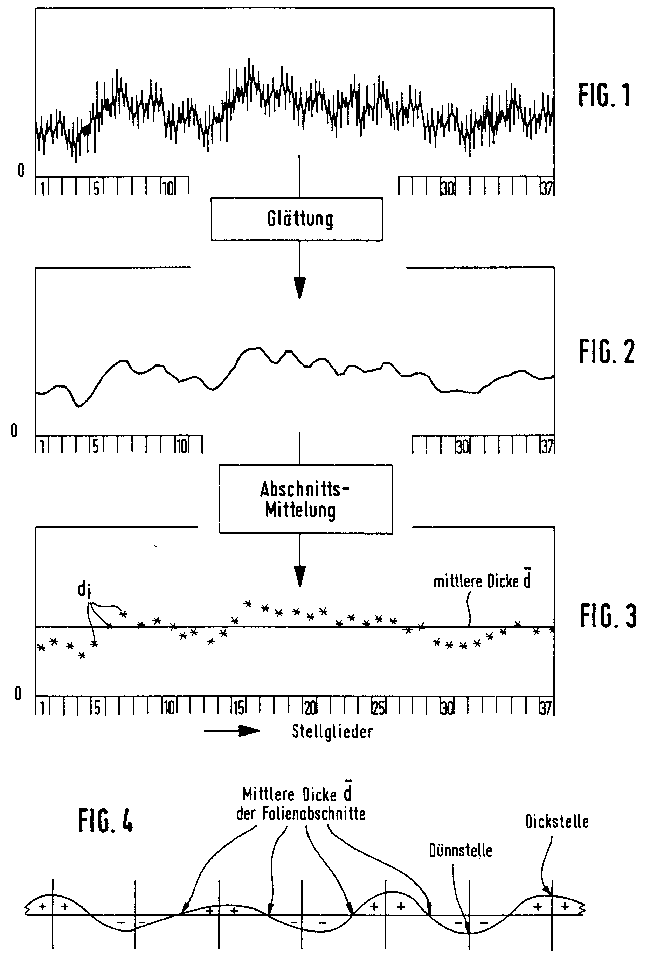

In Figur 1 ist beispielhaft ein kontinuierlich über die Breite gemessenes Dickenprofil einer biaxial gestreckten Endfolie dargestellt, bei dem sehr viele einzelne Dickenwerte, nämlich mehr als 1000, über die Breite gemessen werden. An der Düsenlippe der Breitschlitzdüse, aus der die Vorfolie extrudiert wird, die anschließend durch biaxiale Streckung zu der Endfolie wird, können nur so viele Werte eingestellt werden, wie Stellglieder für die bewegliche Düsenlippe vorhanden sind. In einer praktikablen Ausführungsform sind beispielsweise 36 bis 40 Stellglieder für die Düsenoberlippe einer Breitschlitzdüse vorgesehen, deren Düsenspalt eine Breite von etwa 1 m hat. Diese relativ geringen Einstellmöglichkeiten des Düsenspaltes der Breitschlitzdüse erfordern, daß die kontinuierlich gemessenen Dickenwerte auf die Anzahl verdichtet werden muß, die der Anzahl der Einstellmöglichkeiten für die Düsenoberlippe entspricht, d.h. es muß z.B. eine Mittelung auf insgesamt 37 Folienabschnitte, wenn 37 Stellglieder vorhanden sind, vorgenommen werden, die aneinander angrenzend sich über die Breite der Vorfolie erstrecken. Dies bedeutet bei einer Folienbreite der Vorfolie von 1 m und bei 37 Stellgliedern, daß rund 2,5 cm der einzelne Folienabschnitt breit ist.

Bei dieser Mittelung des gemessenen Dickenprofils erfolgt ein zweistufiger Verdichtungsprozeß, wobei die erste Stufe des Verdichtungsprozesses in Fig. 2 dargestellt ist, gemäß der ein Dickenprofil aus beispielsweise 540 gemessenen Dickenwerten gewonnen wird. Dieses gemittelte Dickenprofil wird für die visuelle Begutachtung der biaxial gestreckten Endfolie genutzt.

Figur 3 zeigt ein aus dem gemittelten Dickenprofil der Fig. 2 verdichtetes Regelprofil für die Dicke der Endfolie in der vorgegebenen Anzahl von 37 Folienabschnitten gemäß dem angeführten praktischen Ausführungsbeispiel. Jedem dieser 37 Folienabschnitte ist ein Stellglied zum Verstellen der beweglichen Düsenoberlippe der Breitschlitzdüse zuzuordnen.

Die anhand der Figuren 1 bis 3 beschriebenen Vorgänge, wie Glättung des gemessenen Dickenprofils und zweistufige Verdichtung des Dickenprofils zu dem Regelprofil aus 37 Dickenwerten, erfolgen über einen Prozeßrechner. Bei diesen Glättungs- und Mittelungsvorgängen muß stets die Tatsache im Auge behalten werden, daß aus mehr als 1000 Meßwerten der Foliendicke eine Verdichtung auf nur 37 Regelwerte stattfindet.

Wie den Figuren 1 bis 3 zu entnehmen ist, ergeben sich im Dickenprofil der Endfolie sowohl Dick- als auch Dünnstellen, die jeweils von einer mittleren Dicke nach oben oder nach unten hin abweichen. Die Differenz zwischen den Dickstellen und der mittleren Dicke bzw. zwischen der mittleren Dicke und den Dünnstellen liefern beispielsweise Regelsignale für die Stellglieder und/oder eine Heizvorrichtung, die die Düsenoberlippe mit entsprechend unterschiedlichen Heizleistungen an den Stellen, an denen Dick- und/oder Dünnstellen auftreten, beaufschlagt.

Die Regelung arbeitet im allgemeinen so gut, daß zumindest im zeitlichen Mittel, bei einer lokalen Glättung bzw. Mittelung über mehrere Traversierungen der Folie, die repräsentativen Dicken in den einzelnen Folienabschnitten gleichgroß sind, d.h. die Folienabschnitte die gleiche mittlere Dicke aufweisen. Jedoch ist es fehlerhaft, daraus den Schluß zu ziehen, daß das Dickenprofil der Folie absolut plan wäre. Es gilt vielmehr, daß ein sogenanntes Restprofil in den Bereichen der Folienabschnitte vorhanden ist, das in Figur 4 schematisch gezeigt ist. Es sind zwar die Mittelwerte jedes Folienabschnittes konstant, jedoch ist das Dickenprofil in diesen Folienabschnitten nicht plan, vielmehr heben sich bei der Dickenmessung über den einzelnen Folienabschnitt die zu dicken und zu dünnen Bereiche des Folienabschnittes gegeneinander auf. Das Restprofil befindet sich zwischen den Stellgliedern und ist durch diese nicht beeinflußbar. Die Dick-/Dünnstellen des Restprofils sind lokal feststehend, d.h. auch zeitlich permanent, wodurch sie bei dem Aufwickeln der Endfolie Wickelprobleme ergeben, da sich in den Folienrollen infolge der Dickstellen ringförmige Wülste beim Aufwickeln ausbilden, die dann die Planlage der abgewickelten Folienbahn beeinträchtigen.

Im Restprofil nach der Figur 4 sind die Positionen der Stellglieder durch entsprechende Pfeile angedeutet, und es ist erkennbar, daß in diesen Positionen das Dickenprofil die horizontale Linie, die eine vorgegebene mittlere Dicke darstellt, schneidet. Dies ist gleichbedeutend damit, wie schon vorhin erwähnt wurde, daß die Mittelwerte jedes Folienabschnittes konstant sind, d.h. gleich der vorgegebenen mittleren Dicke der Folie. Die quer zu den Positionen der Stellglieder versetzten Dick- und/oder Dünnstellen des Dickenprofils sind durch vertikale Striche in Figur 4 markiert.

Zur Vergleichmäßigung der Dick- und/oder Dünnstellen des Dickenprofils bieten sich mehrere Möglichkeiten an, darunter ein System von Stellgliedern mit sehr vielen, schmalen Stellgliedern, bei dem sich jedoch folgende Probleme ergeben. Die Anzahl der Stellglieder kann wegen deren räumlicher Ausdehnung nicht beliebig erhöht werden. Bei der üblichen Breite der Stellglieder von etwa 25 mm ist es sehr schwierig, bei gegebener Dick-/Dünnstelle in der Endfolie das entsprechende Stellglied zu finden, durch dessen Regelung die Dick-/Dünnstelle geglättet werden kann. Eine Erhöhung der Anzahl der Stellglieder erschwert die Glättung der Endfolie.

Zur Vergleichmäßigung des Dickenprofils der Endfolie muß daher eine Möglichkeit gefunden werden, an jeder beliebigen Stelle der Folie bzw. eines Folienabschnitts eingreifen zu können. Als Lösung hierfür wird eine Heizvorrichtung vorgesehen, die als Ganzes seitlich quer zu der Längsrichtung der Folie verschiebbar ist. Aus einer Messung des Dickenprofils mit nachfolgender Glättung und Mittelung des Dickenprofils für eine vorgegebene Anzahl von Folienabschnitten werden die Dick-/Dünnstellen des Restprofils bestimmt. Somit kann aus der Messung des Dickenprofils die optimale Quereinstellung der Heizvorrichtung errechnet werden, um die vorhandenen Dick-/Dünnstellen im Restprofil zu glätten. In diese berechnete Quereinstellung wird dann die Heizvorrichtung verfahren, um dann an Ort und Stelle durch unterschiedliche Temperaturen bzw. Heizleistungen eine Regelung des Dickenprofils zu erzielen, bei der die Dick-/Dünnstellen, die außerhalb des Regelbereichs der vorhandenen Stellglieder liegen, geglättet werden.

Die Regelung des Dickenprofils nach dem erfindungsgemäßen Verfahren setzt sich beispielsweise in der Weise zusammen:

a) Dicke und Einstellung wird manuell über die Stellglieder vorgenommen,

b) eine automatische Feineinstellung geschieht in herkömmlicher Weise mit Hilfe der Stellglieder, die beispielsweise Thermobolzen sind,

c) eine Feinsteinstellung des Dickenprofils erfolgt automatisch mittels einer querbeweglichen Heizvorrichtung, die zusätzlich zu den herkömmlichen Stellgliedern vorhanden ist,

oder

a) die Grundeinstellung erfolgt manuell mit Hilfe von herkömmlichen Stellgliedern,

b) die Feineinstellung wird automatisch mittels einer querbeweglichen Heizvorrichtung vorgenommen.

Bei dem letzteren Fall sind beispielsweise die Stellglieder mechanisch über Schrauben zu verstellende Bolzen, die den Düsenspalt einer Breitschlitzdüse regeln. Eventuell können auch Thermobolzen hierfür vorgesehen werden. Mit der quer zur Folie verfahrbaren Heizvorrichtung, die entweder quer zur Düsenoberlippe oder Düsenunterlippe verstellbar ist, geschieht die Feinverstellung und somit die Glättung des Dickenprofils der Folie.

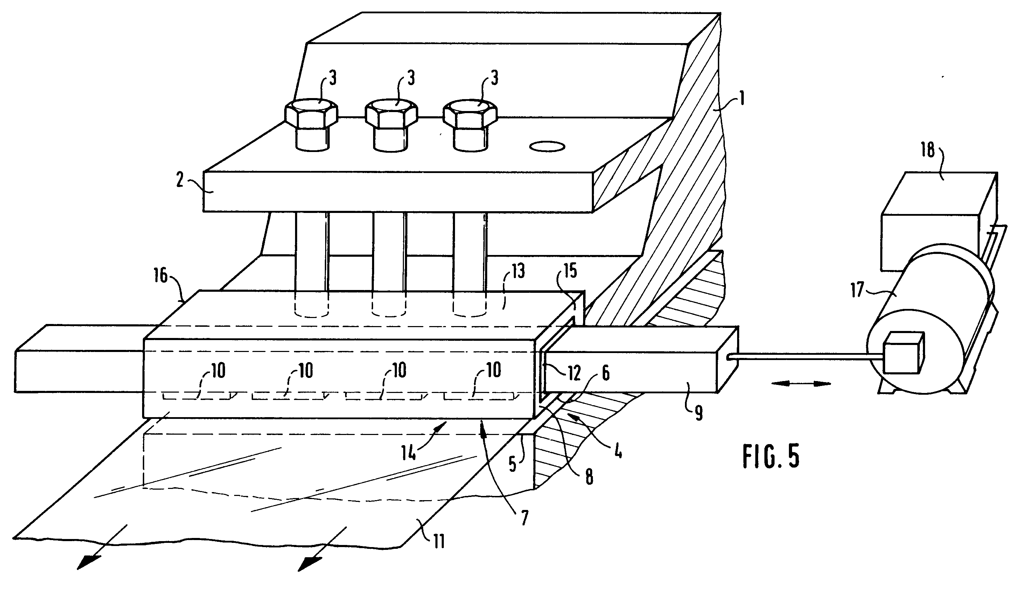

In Figur 5 ist in schematischer perspektivischer Ansicht eine erste Ausführungsform einer Vorrichtung zum Vegleichmäßigen der Dicke einer Folie 11 aus thermoplastischem Kunststoff dargestellt, die durch eine Breitschlitzdüse 4 extrudiert wird. Die Folie bzw. Vorfolie 11 tritt aus einem Düsenspalt 14, der von einer unteren Düsenlippe 5 und einer oberen Düsenlippe 6 begrenzt ist, aus. Zur Regelung der Höhe des Düsenspalts 14 der Breitschlitzdüse 4 sind Stellglieder 3 vorhanden, die mit ihren oberen Enden über Verstellschrauben mit einem nicht dargestellten Gewindeblock eines mit der Breitschlitzdüse 4 integrierten Bundes 2 im Eingriff sind. Bei den Stellgliedern 3 handelt es sich entweder um mechanisch verstellbare Bolzen oder um luftgekühlte und elektrisch beheizte Thermobolzen, wie sie beispielsweise in der deutschen Offenlegungsschrift DE-A 38 34 719 beschrieben sind. Solche Thermobolzen haben an einem Ende eine Klaue, die eine riegelartigen Düsenvorsprung nahe der oberen Düsenlippe der Breitschlitzdüse umfaßt und mittels eines lösbaren Kegelstifts mit dem Düsenvorsprung verbunden ist. Am oberen Ende tragen diese Thermobolzen eine Verstellschraube, die in einem Gewindeblock des Bundes eingeschraubt ist. Mit diesen Stellgliedern 3 erfolgt im Falle von mechanisch verstellbaren Bolzen manuell die Grundeinstellung des Düsenspalts 14, indem die Verstellschraube in bestimmte Positionen geschraubt werden. Handelt es sich bei den Stellgliedern 3 um Thermobolzen, so erfolgt automatisch eine Feineinstellung des Düsenspaltes 14, indem die einzelnen Thermobolzen mit unterschiedlichen Temperaturen bzw. Heizleistungen beaufschlagt werden. In Austrittsrichtung der Folie 11 ist hinter den Stellgliedern 3 eine Heizvorrichtung 7 zur Feinsteinstellung bzw. zur Glättung der Dick-/Dünnstellen des Restprofils der Dicke der Endfolie angeordnet. Hierzu ist anzumerken, daß die Endfolie in Figur 5 nicht gezeigt ist, bei der es sich um die biaxial verstreckte Folie handelt, die durch den Streckvorgang aus der extrudierten Vorfolie 11 entsteht. Die Heizvorrichtung ist quer zur Folienbahn angeordnet und steht in direktem Kontakt mit der oberen Düsenlippe 6. Diese Heizvorrichtung 7 besteht aus einem prismatischen Hohlkasten 8, der von einem beweglichen Stab 9 durchsetzt ist. Die Enden des Stabes 9 stehen an den Stirnflächen 15 und 16 des Hohlkastens 8 seitlich über. An dem quer zur Folie 11 verschiebbaren Stab 9 sind an der Unterseite Heizplättchen 10 angeordnet, die elektrisch beheizt sind und mit unterschiedlichen Temperaturen/Heizleistungen beaufschlagt werden. Der Hohlkasten 8 ist zweckmäßigerweise mit der oberen Düsenlippe 6 integriert.

Die Eintritts- und Austrittsöffnungen des Stabes

9 in den Stirnflächen 15 und 16 des Hohlkastens 8 sind gegen Flüssigkeit abgedichtet. Der Zwischenraum zwischen dem Stab 9 und dem Hohlkasten 8 ist mit einer Flüssigkeit 13 als Wärmeträgermedium gefüllt, das einen sehr hohen Siedepunkt größer als 280 °C besitzt und das den Wärmeübergang zwischen den Heizplättchen 10 des Stabes 9 und der oberen Düsenlippe 6 bewirkt. Die als Wärmeübertragungsmedium eingesetzte Flüssigkeit steht nicht unter Druck, so daß die Anforderungen an die Abdichtungen 12 der Eintritts- und Austrittsöffnungen in den Stirnflächen 15 und 16 in bezug auf Druckdichtigkeit gering sind, nicht jedoch im Hinblick auf die Temperaturfestigkeit. Geeignete Flüssigkeiten sind u.a. Öle hoher Thermostabilität aus Gemischen isomerer Dibenzyl- bzw. Benzyltoluole oder aus der Gruppe der Phenylmethylsilikonöle. Es kommen somit als Wärmeüberträger nur Öle mit sehr hohem Siedepunkt, d.h. geringer Flüchtigkeit bei den erforderlichen Temperaturen von mehr als 280 °C in Frage, die eine ausreichende Thermostabilität bei diesen Temperaturen besitzen. Bei den Gemischen isomerer Dibenzyl- bzw. Benzyltoluole handelt es sich beispielsweise um Öle mit Siedepunkten zwischen 280 und 390 °C, die von den Chemischen Werken HÜLS, Deutschland, geliefert werden. Andere geeignete Öle sind Phenylmethylsilikonöle der Fa. Wacker-Chemie, Deutschland, die unter den Bezeichnungen AP 500 und AP 200, das sind wasserhelle Flüssigkeiten mit sehr geringer Flüchtigkeit von maximal 1 % bei einer Temperatur von 250 °C, erhältlich sind.

Der Abstand zwischen den Heizplättchen 10 und der oberen Düsenlippe 6 der Breitschlitzdüse 4 wird kleiner/gleich 1 mm gewählt, damit in kürzester Zeit ein guter Wärmeübergang zwischen den Heizplättchen 10 und der oberen Düsenlippe 6 bzw. der Folie 11 erreicht wird. Dabei wird durch den geringen Abstand die seitliche Wärmeleitung in der als Wärmeübertrager wirkenden Flüssigkeiten möglichst gering gehalten.

Der Stab 9 der Heizvorrichtung 7 ist mit einem Motor 17 mechanisch verbunden, der den Stab entsprechend dem gemittelten Dickenprofil der Folie so positioniert, daß die Heizplättchen 10 mit den Dick- und/oder Dünnstellen der Folie in Deckung sind. Der Motor 17 empfängt Steuersignale von einem angeschlossenen Prozeßrechner 18, in welchem das über die Folienbreite gemessene Dickenprofil in zumindest zwei Stufen, wie voranstehend anhand der Figuren 2 und 3 beschrieben wurde, für eine vorgegebene Anzahl von Folienabschnitten gemittelt wird.

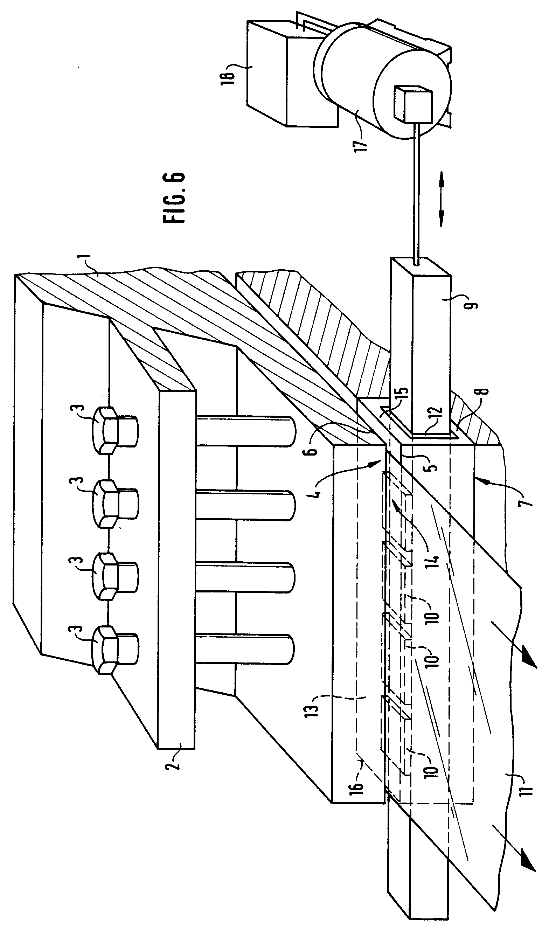

Die in Figur 6 dargestellte zweite Ausführungsform der Vorrichtung nach der Erfindung umfaßt die gleichen Bauteile wie die erste Ausführungsform nach Figur 5, mit dem einzigen Unterschied, daß die Heizvorrichtung 7 den Stellgliedern 3 gegenüberliegt, mit anderen Worten, daß der Hohlkasten 8 der Heizvorrichtung 7 mit der unteren Düsenlippe 5 der Breitschlitzdüse 4 integriert ist und daß die Heizplättchen 10 der Düsenlippe 5 zugewandt sind.

**Patentansprüche**

1. Verfahren zum Vergleichmäßigen der Dicke einer Folie aus thermoplastischem Kunststoff, die durch eine Breitschlitzdüse extrudiert wird, bei dem die jeweilige Dicke der Folie über die Folienbreite gemessen wird und die Dickenmeßwerte innerhalb von gleichbreiten Folienabschnitten gemittelt werden, dadurch gekennzeichnet, daß die Anzahl der gleichbreiten Folienabschnitte gleich der Anzahl der Stellglieder für die verstellbare Oberlippe der Breitschlitzdüse gewählt wird und den Folienabschnitten Verstellabschnitte der Oberlippe, die um die Stellglieder herum liegen, zugeordnet werden, daß in den gleichbreiten Folienabschnitten die Dickenregelung entsprechend den gemessenen Dickenabweichungen der Folienabschnitte von einem vorgegebenen Dickenwert mittels der Stellglieder zur Grobglättung erfolgt und daß die verbleibenden lokalen Dick- und/oder Dünnstellen in den Folienabschnitten zusätzlich mit unterschiedlichen Temperaturen/Heizleistungen quer über die Folienbahn zur Feinglättung der Folie beaufschlagt werden.

2. Verfahren nach Anspruch 1, dadurch gekennzeichnet, daß die Dick- und/oder Dünnstellen der Folienbahn mit unterschiedlichen Temperaturen/Heizleistungen mit Hilfe einer stufenlos, quer zur Folienbahn bewegten Heizvorrichtung beaufschlagt werden und daß die Grobglättung durch die Stellglieder und die Temperaturbeaufschlagung für die Feinglättung durch die Heizvorrichtung von den einander gegenüberliegenden Düsenlippen aus vorgenommen wird.

3. Verfahren nach Anspruch 1, dadurch gekennzeichnet, daß die lokalen Dick- und/oder Dünnstellen in den Folienabschnitten mit unterschiedlichen Temperaturen/Heizleistungen der quer zur Folienbahn bewegten Heizvorrichtung, von der gleichen Düsenlippe aus, an der die Grobglättung mittels der Stellglieder geschieht, beaufschlagt werden.

4. Vorrichtung zum Vergleichmäßigen der Dicke einer Folie aus thermoplastischem Kunststoff, die durch eine Breitschlitzdüse extrudiert wird, mit deren Düsenkörper nahe der oberen Düsenlippe Bolzen als Stellglieder im Eingriff stehen, wobei die oberen Enden der Bolzen über Verstellschrauben mit einem Gewindeblock eines mit der Breitschlitzdüse integrierten Bundes verbunden sind, dadurch gekennzeichnet, daß eine Heizvorrichtung (7), die quer zur Folienbahn angeordnet ist, direkten Kontakt mit einer der Düsenlippen (5; 6) hat, einen quer verschiebbaren Stab (9) aufweist, an dem Heizplättchen (10) angeordnet sind, die elektrisch beheizt sind.

5. Vorrichtung nach Anspruch 4, dadurch gekennzeichnet, daß die Heizvorrichtung (7) einen prismatischen Hohlkasten (8) aufweist, der von dem beweglichen Stab (9) durchsetzt ist, dessen Enden an den Stirnflächen (15, 16) des Hohlkastens (8) seitlich überstehen und daß der Hohlkasten (8) mit der oberen oder unteren Düsenlippe (6; 5) integriert ist.

6. Vorrichtung nach Anspruch 5, dadurch gekennzeichnet, daß die Eintritts- und Austrittsöffnungen des Stabes (9) in den Stirnflächen (15, 16) des Hohlkastens (8) gegen Flüssigkeit abgedichtet sind.

7. Vorrichtung nach Anspruch 6, dadurch gekennzeichnet, daß der Zwischenraum zwischen dem Stab (9) und dem Hohlkasten (8) mit einer Flüssigkeit (13) gefüllt ist, die den Wärmeübergang zwischen den Heizplättchen (10) des Stabes (9) über die Unterseite bzw. Oberseite des Hohlkastens zu der Düsenlippe (6 bzw. 5) verbessert.

8. Vorrichtung nach Anspruch 7, dadurch gekennzeichnet, daß die Flüssigkeit (13) ein Öl mit einem Siedepunkt größer 280 °C und hoher Thermostabilität aus Gemischen isomerer Dibenzyl- bzw. Benzyltoluole oder aus der Gruppe der Phenylmethylsiliconöle ist und daß die Flüssigkeit nicht unter Druck steht.

9. Vorrichtung nach Anspruch 4, dadurch gekennzeichnet, daß der Abstand zwischen den Heizplättchen (10) und der Düsenlippe (5 bzw. 6) kleiner/gleich 1 mm ist.

10. Vorrichtung nach Anspruch 4, dadurch gekennzeichnet, daß der Stab (9) der Heizvorrichtung (7) entsprechend dem gemittelten Dickenprofil der Folie motorisch so positionierbar ist, daß die Heizplättchen (10) mit den Dick- und/oder Dünnstellen der Folie in Deckung sind und daß der Stab (9) von einem computergesteuerten Motor (17) angetrieben ist, der seine Steuersignale von einem Prozeßrechner (18) empfängt, in dem das über die Folienbreite gemessene Dickenprofil in zumindest zwei Stufen für eine vorgegebene Anzahl von Folienabschnitten gemittelt wird.

FIG. 1

Glättung

FIG. 2

Abschnitts-Mittelung

$d_i$

mittlere Dicke $\bar{d}$

FIG. 3

Stellglieder

FIG. 4

Mittlere Dicke $\bar{d}$
der Folienabschnitte

Dünnstelle

Dickstelle

FIG.5

FIG. 6

EP 0 505 960 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 514 348 (K. IGUCHI ET AL.)<br>* Spalte 1, Zeile 20 - Zeile 25 *<br>* Spalte 1, Zeile 55 - Zeile 58 *<br>* Spalte 2, Zeile 39 - Spalte 3, Zeile 8; Abbildungen 4-6 *<br>* Spalte 4, Zeile 18 - Zeile 24; Abbildung 8 *<br>* Spalte 5, Zeile 14 - Zeile 24; Anspruch 10 *<br>--- | 1 | B29C47/92<br>B29C47/16 |
| D,A | DE-A-3 834 719 (HÖCHST AG)<br>* Spalte 3, Zeile 56 - Spalte 4, Zeile 16; Abbildung 1 *<br>* Spalte 5, Zeile 3 - Zeile 14; Abbildung 2 *<br>--- | 1-10 | |
| A | PATENT ABSTRACTS OF JAPAN<br>vol. 12, no. 222 (M-712)(3069) 24. Juni 1988<br>& JP-A-63 019 220 ( JAPAN STEEL WORKS LTD. ) 27. Januar 1988<br>* Zusammenfassung *<br>--- | 1 | |
| A | GB-A-2 226 660 (OJI YUKA GOSEISHI CO LTD.)<br>* Seite 8, Zeile 13 - Zeile 20; Abbildungen 2,3 *<br>--- | 1,4 | RECHERCHIERTE SACHGEBIETE (Int. Cl.5 ) |
| A | EP-A-0 367 022 (RÖHM GMBH)<br>* Spalte 2, Zeile 10 - Zeile 43; Abbildungen *<br>--- | 1,4 | B29C |
| A | DE-A-3 107 701 (BASF AG)<br>* Seite 10, Zeile 15 - Seite 11, Zeile 11; Abbildungen 2,3 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 15 MAI 1992 | TOPALIDIS A. |